# EUROPÄISCHE PATENTSCHRIFT

(11) **EP 2 743 301 B1**
(45) Veröffentlichungstag und Bekanntmachung des Hinweises auf die Patenterteilung: **13.01.2016**
(21) Anmeldenummer: 13188459.5
(22) Anmeldetag: 14.10.2013
(51) Int. Cl.: C08L 9/06, C08L 7/00, C08L 9/00, C08L 45/02, C08L 65/00, C08L 61/06, C08L 57/02, C08L 93/00, C08L 93/04, C08K 3/06, C08K 3/36, B60C 1/00

(54) **Schwefelvernetzbare Kautschukmischung**
SULPHUR CROSSLINKABLE RUBBER MIXTURE
MÉLANGE DE CAOUTCHOUC RÉTICULABLE AU SOUFRE

(30) Priorität: 14.12.2012 DE 102012112320
(43) Veröffentlichungstag der Anmeldung: 18.06.2014
(73) Patentinhaber: Continental Reifen Deutschland GmbH, 30165 Hannover (DE)
(72) Erfinder: Pavon Sierra, Viktoria, 30419 Hannover (DE); Weinreich, Hajo, 31552 Apelern (DE); Müller, Norbert, 29336 Nienhagen (DE)
(74) Vertreter: Finger, Karsten

(56) Entgegenhaltungen:
- EP-A1- 2 014 710
- EP-A1- 2 236 316
- WO-A1-2012/062534
- JP-A- S56 131 640
- US-A- 4 218 349
- US-A1- 2005 209 413
- US-A1- 2010 139 825
- US-A1- 2010 317 800
- DATABASE WPI Week 200921 Thomson Scientific, London, GB; AN 2009-F09529 XP002719272, -& JP 2009 035682 A (YOKOHAMA RUBBER CO LTD) 19. Februar 2009 (2009-02-19)
- DATABASE WPI Week 200901 Thomson Scientific, London, GB; AN 2009-A18219 XP002719273, -& JP 2008 297456 A (YOKOHAMA RUBBER CO LTD) 11. Dezember 2008 (2008-12-11)

## Beschreibung

Die Erfindung betrifft eine schwefelvernetzbare Kautschukmischung, insbesondere für Laufstreifen von Fahrzeugluftreifen.

Harze, insbesondere Kohlenwasserstoffharze, sind seit langem bekannte Zuschlagstoffe für Kautschukmischungen für Laufstreifen von Fahrzeugluftreifen. Sie dienen vor allem als Verarbeitungshilfsmittel und bewirken die nötige Grünklebrigkeit der Kautschukmischungen. Ferner lassen sich durch Harze bestimmte Vulkanisateigenschaften wie Härte, Modul und Quellverhalten beeinflussen. Sie können auch als Vulkanisationsharze oder Haftvermittler eingesetzt werden. Typische in der Kautschukindustrie eingesetzte Klebharze sind z.B. Petroleumharze, Terpenharze, Kolophoniumharze, Phenol-Formaldehydharze und Cumaron-Inden-Harze.

So ist beispielsweise in der EP 1808456 B1 die Verwendung eines Cumaron-Inden-Harzes anstelle eines Teiles des Prozessöls einer Kautschukmischung offenbart. Durch die Verwendung einer solchen Kautschukmischung im Laufstreifen eines Fahrzeugluftreifens verbessert sich dessen Nass- und Trockenbremsverhalten.

Es ist jedoch bekannt, dass sich eine Verbesserung der Nassgriffeigenschaften nachteilig auf die Kälteflexibilität von Kautschukmischungen auswirken.

Des Weiteren ist der Einsatz von sogenannten Flüssig-Polymeren in Kautschukmischungen bekannt. Flüssig-Polymere weisen eine vergleichsweise niedrige Viskosität aufgrund des vergleichsweise niedrigen Molekulargewichtes auf.

Der Erfindung liegt nun die Aufgabe zugrunde, eine schwefelvernetzbare Kautschukmischung bereitzustellen, die eine verbesserte Prozessierbarkeit, insbesondere eine niedrigere Mooney-Viskosität, aufweist ohne dass sich die Kälteflexibilität signifikant verschlechtert. Des Weiteren sollen die Nassgriffeigenschaften weiter verbessert und/oder zumindest nicht verschlechtert werden.

Gelöst wird die Aufgabe erfindungsgemäß dadurch, dass die schwefelvernetzbare Kautschukmischung folgende Bestandteile enthält:
- 1 bis 90 phr wenigstens eines Styrol-Butadien-Kautschuks und/oder wenigstens eines Butadien-Kautschuks und
- 5 bis 95 phr wenigstens eines natürlichen und/oder synthetischen Polyisoprens, welches ein Molekulargewicht von größer als 200000 g/mol aufweist, und
- 2 bis 50 phr wenigstens eines synthetischen Polyisoprens, welches ein Molekulargewicht von 500 bis 70000 g/mol aufweist, und
- 2 bis 20 phr wenigstens eines Kohlenwasserstoffharzes, welches ein Homopolymer und/oder ein Copolymer ist und ausgewählt ist aus der Gruppe bestehend aus Cumaron-Inden-Harzen und/oder Terpen-Phenol-Harzen und/oder aliphatischen C5-Kohlenwasserstoffharzen und/oder Phenol-Formaldehyd-Harzen und/oder aliphatischen C7-Kohlenwasserstoffharzen und/oder aromatischen C7-Kohlenwasserstoffharzen und/oder aliphatischen C9-Kohlenwasserstoffharzen und/oder aromatischen C9-Kohlenwasserstoffharzen und/oder Terpenharzen und/oder Kolophoniumharzen, und 5 bis 180 phr Kieselsäure.

Überraschenderweise weist die erfindungsgemäße Kautschukmischung eine im Vergleich zum Stand der Technik verringerte Mooney-Viskosität bei verbesserten oder zumindest gleichbleibenden Nassgriffeigenschaften und einer vergleichsweise guten Kälteflexibilität auf.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Als (in die Berechnung eingehende) Kautschuke werden im Rahmen dieser Erfindung auch das oder die Polyisopren/e betrachtet, die ein Molekulargewicht von 500 bis 70000 g/mol aufweisen.

Die oben genannten Kohlenwasserstoffharze werden im Rahmen dieser Erfindung nicht als Kautschuk betrachtet.

Die erfindungsgemäße Kautschukmischung enthält 1 bis 90 phr wenigstens eines Styrol-Butadien-Kautschuks und/oder wenigstens eines Butadien-Kautschuks.

Bei dem Styrol-Butadien-Kautschuk (Styrol-Butadien-Copolymer) kann es sich um lösungspolymerisiertes Styrol-Butadien-Copolymer (S-SBR) mit einem Styrolgehalt, bezogen auf das Polymer, von ca. 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert und/oder entlang der Kohlenstoffkette modifiziert (engl. backbone modified) sein. Im Rahmen der vorliegenden Erfindung werden die Begriffe modifiziert und funktionalisiert synonym verwendet.

Bei der Modifizierung kann es sich um die folgenden Gruppen und Funktionalisierungen handeln: Hydroxy-Gruppen und/oder Ethoxy-Gruppen und/oder Epoxy-Gruppen und/oder Siloxan-Gruppen und/oder Amino-Gruppen und/oder Aminosiloxan und/oder CarboxylGruppen und/oder Phthalocyanin-Gruppen und/oder Alkoxysily-Gruppen und/oder Isocyanat-Gruppen. Dabei ist es denkbar, dass eine oder mehrere dieser Gruppen über eine gemeinsame Alkyl-Gruppe miteinander verknüpft sind.

Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die Menge an Styrol-Butadien-Kautschuk in der erfindungsgemäßen Kautschukmischung beträgt besonders bevorzugt 30 bis 80 phr.

Bei dem Butadien-Kautschuk (BR, Polybutadien) kann es sich um alle dem Fachmann bekannten Typen handeln. Darunter fallen u.a. die sogenannten high-cis- und low-cis-Typen, wobei Butadien-Kautschuk mit einem cis-Anteil größer oder gleich 90 Gew.-% als high-cis-Typ und Butadien-Kautschuk mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Ein high-cis-Polybutadien ist z.B. Nd-BR (Neodym-katalysierter Butadien-Kautschuk). Mit Nd-BR werden besonders gute Vulkanisateigenschaften der Kautschukmischung erzielt.

Das eingesetzte Polybutadien kann endgruppenmodifiziert sein. Bei der Modifizierung kann es sich um die oben beschriebenen Gruppen und Funktionalisierungen handeln.

Die Menge an Butadien-Kautschuk in der erfindungsgemäßen Kautschukmischung beträgt bevorzugt 0 bis 60 phr, besonders bevorzugt 0 bis 50 phr und ganz besonders bevorzugt 0 bis 40 phr.

Die erfindungsgemäße Kautschukmischung enthält 5 bis 95 phr, bevorzugt 5 bis 50, besonders bevorzugt 5 bis 35 phr, wenigstens eines natürlichen und/oder synthetischen Polyisoprens, welches ein Molekulargewicht (Gewichtsmittel Mw) von größer als 200000 g/mol aufweist. Dem Fachmann ist bekannt, dass natürliches Polyisopren mit Molekulargewichten vorkommen kann, welche außerhalb des messbaren Bereiches liegen. Derartige natürliche Polyisoprene sind von der Erfindung mit eingeschlossen. Es ist des Weiteren denkbar, dass auch synthetische Polyisoprene ein Molekulargewicht aufweisen, welches außerhalb des messbaren Bereiches liegt. Auch diese synthetischen Polyisoprene sind mit eingeschlossen.

Bevorzugt beträgt das Molekulargewicht des natürlichen und/oder synthetischen Polyisoprens 200000 bis 3000000 g/mol, also zweihunderttausend bis drei Millionen g/mol. Dabei ist es denkbar, dass es sich um 5 bis 95 phr eines Gemisches aus einem natürlichen Polyisopren und einem synthetischen Polyisopren handelt.

Das Molekulargewicht wird mittels GPC (Gelpermeationschromatographie, Polystyrol als Standard, Tetrahydrofuran THF als Elutionsmittel, engl. SEC = Size exclusion chromatography) bestimmt.

Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Erfindungsgemäß enthält die schwefelvernetzbare Kautschukmischung 2 bis 50 phr, bevorzugt 2 bis 30 phr und besonders bevorzugt 2 bis 20 phr, wenigstens eines synthetischen Polyisoprens, welches ein Molekulargewicht (Gewichtsmittel Mw) gemäß GPC (Gelpermeationschromatographie, Polystyrol als Standard, Tetrahydrofuran THF als Elutionsmittel, engl. SEC = Size exclusion chromatography) von 500 bis 70000 g/mol, bevorzugt von 10000 bis 70000 g/mol, besonders bevorzugt von 10000 bis 60000 g/mol, ganz besonders bevorzugt von 30000 bis 60000 g/mol aufweist.

Ein derartiges Polyisopren weist bei Raumtemperatur (21 °C) eine vergleichsweise niedrige Viskosität auf und wird auch als flüssiges Polyisopren oder Flüssig-Polyisopren oder Flüssig-IR bezeichnet.

Bevorzugt wird ein Polyisopren, welches ein Molekulargewicht von 500 bis 70000 g/mol aufweist, mit einem cis-1,4-Anteil von 50 bis 80 Gew.-% verwendet. Dies gilt auch für die bevorzugten, besonders bevorzugten und ganz besonders bevorzugten Molekulargewichte des synthetischen Polyisoprens.

Bevorzugt ist das synthetische Polyisopren mit einem Molekulargewicht gemäß GPC von 500 bis 70000 g/mol ein Homopolymer. Dies gilt auch für die bevorzugten, besonders bevorzugten und ganz besonders bevorzugten Molekulargewichte des synthetischen Polyisoprens.

Das in der erfindungsgemäßen Kautschukmischung eingesetzte synthetische Polyisopren, welches ein Molekulargewicht von 500 bis 70000 g/mol aufweist, ersetzt in den im Stand der Technik bekannten Kautschukmischungen einen Teil oder die gesamte Menge der darin enthaltenen Menge an Naturkautschuk und/oder synthetischem Polyisopren, welche ein Molekulargewicht von größer als 200000 g/mol aufweisen und bei Raumtemperatur fest sind.

Im Rahmen der vorliegenden Erfindung wird im Folgenden zur Vereinfachung und zur Abgrenzung gegenüber dem üblichen synthetischen und/oder natürlichen Polyisopren, welches bei Raumtemperatur fest ist, u.a. auch der Begriff flüssiges Polyisopren verwendet.

Die erfindungsgemäße schwefelvernetzbare Kautschukmischung enthält 2 bis 20 phr wenigstens eines der oben genannten Kohlenwasserstoffharze. Bevorzugt enthält sie 2 bis 15 phr, besonders bevorzugt 3 bis 11 phr wenigstens eines Kohlenwasserstoffharzes.

In einer bevorzugten Ausführungsform der Erfindung enthält die Kautschukmischung 6 bis 11 phr wenigstens eines Kohlenwasserstoffharzes.

Das Kohlenwasserstoffharz ist ein Homopolymer und/oder ein Copolymer.

Unter Homopolymer wird in der vorliegenden Anmeldung ein Polymer verstanden, welches gemäß Römpp Online Version 3.26 "aus Monomeren nur einer Art entstanden ist".

Unter Copolymer wird im Rahmen der vorliegenden Erfindung ein Polymer verstanden, welches aus mehreren verschiedenen Monomeren aufgebaut ist.

Es ist im Rahmen der vorliegenden Erfindung denkbar, dass die schwefelvernetzbare Kautschukmischung ein Gemisch verschiedener der oben genannten Kohlenwasserstoffharze enthält. Hierbei kann es sich z.B. um ein Gemisch aus einem homopolymeren Kohlenwasserstoffharz mit einem copolymeren Kohlenwasserstoffharz handeln oder z.B. um ein Gemisch aus zwei verschiedenen homopolymeren Kohlenwasserstoffharzen.

Der Erweichungspunkt des Kohlenwasserstoffharzes gemäß ASTM D 3461 (Ring und Ball) beträgt bevorzugt 0 bis 170 °C.

Gemäß einer vorteilhaften Weiterbildung der Erfindung enthält die Kautschukmischung wenigstens ein aliphatisches C5-Kohlenwasserstoffharz.

Enthält die erfindungsgemäße Kautschukmischung wenigstens ein aliphatisches C5-Kohlenwasserstoffharz, ist es bevorzugt, wenn dieses einen Erweichungspunkt gemäß ASTM D 3461 (Ring und Ball) von 0 bis 170 °C, besonders bevorzugt 80 bis 120 °C und ganz besonders bevorzugt von 90 bis 110 °C hat. In einer besonders bevorzugten Ausführungsform wird ein aliphatisches C5-Kohlenwasserstoffharz verwendet, welches einen Erweichungspunkt von 95 bis 105 °C hat.

Ein solches bei Raumtemperatur festes aliphatisches C5-Kohlenwasserstoffharz ist z.B. unter dem Handelsnamen Escorez™ 1102 Prills der Firma Exxonmobil erhältlich.

Gemäß einer weiteren vorteilhaften Weiterbildung der Erfindung enthält die Kautschukmischung wenigstens ein Cumaron-Inden-Harz.

Enthält die erfindungsgemäße Kautschukmischung wenigstens ein Cumaron-Inden-Harz, ist es bevorzugt, wenn dieses einen Erweichungspunkt gemäß ASTM D 3461 (Ring und Ball) von 0 °C bis 170 °C, besonders bevorzugt von 0 °C bis 50 °C, ganz besonders bevorzugt von 0 bis 30 °C und wiederum ganz besonders bevorzugt von 5 bis 15 °C, hat. In einer besonders bevorzugten Ausführungsform wird ein Cumaron-Inden-Harz verwendet, welches einen Erweichungspunkt von 8 bis 12 °C hat. Ein solches bei Raumtemperatur flüssiges Cumaron-Inden-Harz ist z.B. unter dem Handelsnamen Novares® C 10 der Firma Rütgers Chemicals, Deutschland erhältlich.

Enthält die erfindungsgemäße Kautschukmischung wenigstens ein Terpenharz, ist es bevorzugt, wenn dieses ein Homopolymer und/oder Copolymer auf Basis von Limonen und/oder α-Pinen und/oder β-Pinen und/oder Dipenten ist.

Gemäß einer vorteilhaften Weiterbildung der Erfindung enthält die schwefelvernetzbare Kautschukmischung zusätzlich wenigstens 0,1 bis 30 phr, bevorzugt 1 bis 25 phr, besonders bevorzugt 5 bis 22 phr wenigstens eines weiteren Weichmachers. Zu den weiteren Weichmachern zählen im Rahmen der vorliegenden Erfindung alle dem Fachmann bekannten wie z.B. aromatische, naphthenische oder paraffinische Mineralölweichmacher, wie z.B. MES (mild extraction solvate) oder TDAE (treated distillate aromatic extract) oder Biomass-to-Liquid-Öle (BTL) oder pflanzliche Öle wie z.B. Rapsöl.

Die Kautschukmischung kann als Füllstoffe Ruß und/oder Kieselsäure in üblichen Mengen enthalten. Sie kann außerdem noch andere Füllstoffe, wie beispielsweise Alumosilicate, Kreide, Stärke, Magnesiumoxid, Titandioxid oder Kautschukgele enthalten.

Die verwendbaren Ruße weisen bevorzugt folgende Charakteristika auf: DBP-Zahl (gemäß ASTM D 2414) 90 bis 200 ml/100 g und/oder STSA-Oberfläche (gemäß ASTM D 6556) 70 bis 170 m²/g und/oder Jodadsorptionszahl (gemäß ASTM D 1510) 10 bis 250 g/kg. Als Ruß kann z.B. N339 (DBP = 120 ml/100 g; Jodzahl = 90 g/kg; STSA = 88 m²/g) eingesetzt werden.

Es ist im Rahmen der vorliegenden Erfindung denkbar, dass zwei oder mehrere verschiedene Ruße in der Kautschukmischung vorhanden sind.

Die Gesamtmenge des eingesetzten Rußes bzw. der eingesetzten Ruße beträgt 0,1 bis 80 phr, bevorzugt 0,1 bis 50 phr, besonders bevorzugt 2 bis 20 phr und ganz besonders bevorzugt 2 bis 10 phr.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt 100 bis 260 m²/g und eine CTAB-Oberfläche (gemäß ASTM D 3765) von 30 bis 350 m²/g, bevorzugt von 30 bis 250 m²/g, besonders bevorzugt von 100 bis 250 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Es ist im Rahmen der vorliegenden Erfindung denkbar, dass zwei oder mehrere verschiedene Kieselsäuren in der Kautschukmischung vorhanden sind.

Die Gesamtmenge der eingesetzten Kieselsäure(n) beträgt 5 bis 180 phr, bevorzugt 5 bis 140 phr, besonders bevorzugt 30 bis 100 phr und ganz besonders bevorzugt 60 bis 100 phr.

Zur Verbesserung der Verarbeitbarkeit und zur Anbindung der Kieselsäure und anderer ggf. vorhandener polarer Füllstoffe an den Dienkautschuk können Silan-Kupplungsagenzien in üblichen Mengen in Kautschukmischungen eingesetzt werden. Als Silan-Kupplungsagenzien können dabei alle dem Fachmann für die Verwendung in Kautschukmischungen bekannten Silan-Kupplungsagenzien verwendet werden. Dies können z.B. 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, sein. TESPT kann dabei beispielsweise auch als Gemisch mit Industrieruß (Handelsname X50S® der Firma Evonik) zugesetzt werden. Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Wiederum ganz besonders bevorzugt ist ein Silan, welches zu 70 bis 80 Gew.-% Disulfide enthält. Ein solches Gemisch ist z.B. unter dem Handelsnamen SG SI 996 der Firma Nanjing Shuguang Silane Co. Ltd. erhältlich.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Die Silan-Kupplungsagenzien werden in Mengen von 0,2 bis 30 phf, bevorzugt 1 bis 15 phf, eingesetzt, da dann eine optimale Anbindung des Füllstoffes an den oder die Kautschuke erfolgen kann. Die Einheit phf (parts per hundred parts of filler by weight) bezieht sich hierbei jeweils auf 100 Gewichtsteile Kieselsäure, wobei die Mengen an enthaltenen Rußen in diese Berechnung nicht eingehen.

Die erfindungsgemäße schwefelvernetzbare Kautschukmischung enthält weiterhin ein Vulkanisationssystem, das wenigstens einen Beschleuniger und elementaren Schwefel und/oder eine schwefelspendende Substanz enthält. Die Mengen dieser genannten Bestandteile des Vulkanisationssystems sind dabei die im Stand der Technik bekannten üblichen Mengen in schwefelvernetzten Kautschukmischungen.

Der Beschleuniger ist ausgewählt aus der Gruppe enthaltend z.B. Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern.

Bevorzugt ist die Verwendung zumindest eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Gemäß einer bevorzugten Weiterbildung der Erfindung sind mehrere Beschleuniger in der Kautschukmischung enthalten ist.

Besonders bevorzugt ist die Verwendung der Beschleuniger 2-Mercaptobenzothiazol (MBT) und/oder CBS und/oder Diphenylguanidin (DPG).

Als schwefelspendende Substanz können dabei alle dem Fachmann bekannten schwefelspendenden Substanzen verwendet werden. Bevorzugt ist die schwefelspendende Substanz ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetramethylthiurammonosulfid (TMTM) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexylthiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.

Des Weiteren kann die erfindungsgemäße Kautschukmischung übliche Zusatzstoffe in üblichen Gewichtsteilen enthalten. Zu diesen Zusatzstoffen zählen a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), b) Aktivatoren, wie z. B. Zinkoxid und Fettsäuren (z. B. Stearinsäure), c) Zinkseifen, d) Wachse, e) weitere Harze zusätzlich zu den erfindungsgemäß bereits genannten Harzen und f) Mastikationshilfsmittel, wie z. B. 2,2'-Dibenzamidodiphenyldisulfid (DBD).

Die Vulkanisation der schwefelvernetzbaren Kautschukmischung wird sachgemäß in Anwesenheit von elementarem Schwefel mit Hilfe wenigstens eines Vulkanisationsbeschleunigers und/oder einer schwefelspendenden Substanz durchgeführt. Elementarer Schwefel und Beschleuniger und/oder schwefelspende Substanzen werden im letzten Mischungsschritt in den genannten Mengen der Kautschukmischung zugesetzt. Außerdem können in der Kautschukmischung Vulkanisationsverzögerer sowie weitere die Vulkanisation beeinflussende Substanzen vorhanden sein.

Der Erfindung liegt weiterhin die Aufgabe zugrunde einen Fahrzeugluftreifen bereitzustellen, der gegenüber dem Stand der Technik verbesserte Nassgriff- und/oder Wintereigenschaften aufweist und sich zudem im Vergleich zum Stand der Technik im Hinblick auf die Viskosität der enthaltenen Kautschukmischung(en) vereinfacht herstellen lässt. Gelöst wird diese Aufgabe dadurch, dass der Fahrzeugluftreifen in wenigstens einem Bauteil die erfindungsgemäße Kautschukmischung enthält. Bevorzugt handelt es sich bei dem Bauteil um einen Laufstreifen, vorzugsweise eines Fahrzeugluftreifens für PKW. Die Kautschukmischung kann aber auch im Laufstreifen eines LKW-Reifens, in der Seitenwand und/oder in den inneren Bauteilen eines Fahrzeugluftreifens, den sogenannten Body-Bauteilen, zum Einsatz kommen.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (elementarer Schwefel, Beschleuniger, schwefelspendende Substanzen sowie ggf. Vulkanisationsverzögerer) enthält, in ein oder mehreren Mischstufen hergestellt wird und im Anschluss durch Zugabe des Vulkanisationssystems die Fertigmischung erzeugt wird.

Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen geeignet.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäßen Mischungen sind mit E gekennzeichnet. Verglichen werden diese Beispiele mit einer Referenzkautschukmischung, die mit Ref gekennzeichnet ist.

Die Mischungsherstellung erfolgte unter üblichen Bedingungen in drei Stufen in einem Labortangentialmischer. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Umsatzzeiten von 10% Umsatz (t₁₀ Anvulkanisationszeit) und 90% Umsatz (t₉₀, Ausvulkanisationszeit) mittels rotorlosem Vulkameter (MDR = Moving Disc Rheometer) gemäß DIN 53 529
- Mooney-Viskosität ML (1+3) gemäß ASTM D1646
- Shore Härte A bei Raumtemperatur RT und 70 °C gemäß DIN ISO 7619-1
- Rückprallelastizitäten bei RT gemäß DIN 53 512
- Zugfestigkeit, Reißdehnung und Spannungswert bei 300 % statischer Dehnung (Modul 300 %) bei Raumtemperatur gemäß DIN 53 504
- Über die Dehnung gemittelter dynamischer Speichermodul E' bei -15 °C, bei einer Vorkompression von 20 % im Dehnungsbereich von 0,1 bis 12 % bei einer Frequenz von 10 Hz in Anlehnung an DIN 53513

**Tabelle 1**

| **Bestandteile** | **Einh.** | **Ref** | **V1** | **V2** | **V3** | **V4** | **E1** | **E2** | **E3** |
|---|---|---|---|---|---|---|---|---|---|
| NR: TSR ^{k)} | phr | 30 | 25 | 15 | 30 | 30 | 15 | 25 | 15 |
| Polyisopren, synthet. ^{a)} | phr | - | 5 | 15 | - | - | 15 | 5 | 15 |
| SBR ^{b)} | phr | 70 | 70 | 70 | 70 | 70 | 70 | 70 | 70 |
| Ruß: N339 | phr | 5 | 5 | 5 | 5 | 5 | 5 | 5 | 5 |
| Kieselsäure ^{c)} | phr | 86 | 86 | 86 | 86 | 86 | 86 | 86 | 86 |
| Silan ^{d)} | phf | 7,2 | 7,2 | 7,2 | 7,2 | 7,2 | 7,2 | 7,2 | 7,2 |
| Weichmacher ^{e)} | phr | 22 | 22 | 22 | 15 | 15 | 15 | 15 | 15 |
| Weichmacher ^{f)} | phr | 5 | 5 | 5 | 5 | 5 | 5 | 5 | 5 |
| Harz ^{g)} | phr | - | - | - | 7 | - | 7 | - | - |
| Harz ^{h)} | phr | - | - | - | - | 7 | - | 7 | 7 |
| Alterungsschutzmittel | phr | 7,2 | 7,2 | 7,2 | 7,2 | 7,2 | 7,2 | 7,2 | 7,2 |
| Stearinsäure | phr | 1 | 1 | 1 | 1 | 1 | 1 | 1 | 1 |
| Prozesshilfsmittel ⁱ⁾ | phr | 4 | 4 | 4 | 4 | 4 | 4 | 4 | 4 |
| Zinkoxid | phr | 2 | 2 | 2 | 2 | 2 | 2 | 2 | 2 |
| Beschleuniger ^{j)} | phr | 4,1 | 4,1 | 4,1 | 4,1 | 4,1 | 4,1 | 4,1 | 4,1 |
| Elementarer Schwefel | phr | 1,7 | 1,7 | 1,7 | 1,7 | 1,7 | 1,7 | 1,7 | 1,7 |

| **Eigenschaften** | | | | | | | | | |
|---|---|---|---|---|---|---|---|---|---|
| t₁₀ | min | 2,7 | 2,8 | 3,2 | 2,2 | 2,2 | 3,1 | 2,6 | 3 |
| t₉₀ | min | 11,5 | 11,3 | 11,5 | 11,5 | 9,5 | 11 | 9,3 | 9,2 |
| Mooney-Viskosität ML (1+3) bei 100 °C | Mooney-Einh. | 62 | 55 | 50 | 66 | 66 | 45 | 53 | 42 |
| Shore Härte bei RT | Shore A | 66 | 68 | 68 | 68 | 68 | 65 | 66 | 63 |
| Shore Härte bei 70 °C | Shore A | 61 | 60 | 63 | 64 | 63 | 60 | 61 | 59 |
| Rückprallelast. bei RT | % | 26 | 25 | 23 | 23 | 25 | 22 | 25 | 25 |
| E' (- 15 °C) | MPa | 74 | 77 | 111 | 106 | 98 | 97 | 85 | 84 |
| Zugfestigkeit bei RT | MPa | 14 | 15 | 14 | 16 | 17 | 13 | 17 | 15 |
| Reißdehnung bei RT | % | 433 | 457 | 402 | 485 | 510 | 432 | 540 | 496 |
| Modul 300 % | MPa | 9,3 | 9,5 | 10,5 | 9,7 | 9,6 | 9,1 | 9 | 8,6 |

| | | | | | | | | | |
|---|---|---|---|---|---|---|---|---|---|
| ^{a)} Polyisopren: LIR-50, Fa. Kuraray, Mw = 54000 g/mol ^{b)} SBR: Nipol® NS616, Zeon Corp. " Kieselsäure: ULTRASIL® VN 3 GR, Fa. Evonik ^{d)} Silan: SG SI 996, Fa. NANJING SHUGUANG SILANE CO. LTD. ^{e)} Catenex SNR, Fa. Shell ^{f)} RAPESEED OIL, Fa. Saipol ^{g)} aliphatisches C5-Harz: Escorez™ 1102 Prills, Fa. Exxonmobil ^{h)} Cumaron-Inden-Harz, Novares® C10, Fa. Rütgers Chemicals ⁱ⁾ Prozesshilfsmittel: ULTRA-FLOW™ 700 S, Fa. Performance Additives ^{j)} Beschleuniger: MBT, DPG, CBS ^{k)} NR: TSR SMR10CE, CE REGIONAL RUBBER-BUKIT MERTAJAM | | | | | | | | | |

Wie aus der Tabelle 1 hervorgeht, sind die Werte für die Mooney-Viskosität der erfindungsgemäßen Kautschukmischungen E1, E2 und E3, die flüssiges Polyisopren anstelle einer Teilmenge an Naturkautschuk und Harz statt einer Teilmenge an Öl enthalten, niedriger, als mit den Einzelmaßnahmen in den Vergleichsbeispielen V1 bis V4. Aus der geringeren Mooney-Viskosität ergibt sich eine verbesserte Prozessierbarkeit der erfindungsgemäßen Kautschukmischungen.

Gleichzeitig weisen die erfindungsgemäßen Kautschukmischungen gleiche oder niedrigere Werte für die Rückprallelastizität bei Raumtemperatur (RT) auf. Dies sind Indikatoren für verbesserte Nassgriffeigenschaften der erfindungsgemäßen Kautschukmischungen, insbesondere beim Einsatz in Laufstreifen von Fahrzeugluftreifen.

Zusätzlich zeigen die erfindungsgemäßen Kautschukmischungen gleichzeitig überraschend nicht die Verschlechterung der Kälteflexibilität, wie es durch die Einzelmaßnahmen der Zugabe von flüssigem Polyisopren oder die Zugabe eines Kohlenwasserstoffharzes zu erwarten wäre. Je niedriger der dynamischen Speichermodul E' bei -15 °C einer Kautschukmischung, desto besser ist deren Kälteflexibilität. Ausgehend von der Referenz erhöht sich E' bei den Kautschukmischungen V1 und V2 sowie V3 und V4. Geht man z.B. von der Kautschukmischung V4 aus, so hat eine Zugabe von flüssigem Polyisopren, anders als in der Referenzmischung Ref, keine negative Auswirkung auf die Kälteflexibilität sondern überraschenderweise eine positive.

Damit zeigen die erfindungsgemäßen Kautschukmischungen E1, E2 und E3 überraschenderweise eine vergleichsweise gute Kälteflexibilität und damit verbesserte Wintereigenschaften.

Somit zeigen die erfindungsgemäßen Kautschukmischungen im Vergleich zum Stand der Technik eine Verbesserung im Zielkonflikt Nassbremsverhalten/Wintereigenschaften bei einer gleichzeitig verbesserten Prozessierbarkeit.

In den erfindungsgemäßen Kautschukmischungen ergeben sich daher überraschend synergistische Effekte durch das flüssige Polyisopren und Harz.

## Patentansprüche

1. Schwefelvernetzbare Kautschukmischung enthaltend
- 1 bis 90 phr wenigstens eines Styrol-Butadien-Kautschuks und/oder wenigstens eines Butadien-Kautschuks und
- 5 bis 95 phr wenigstens eines natürlichen und/oder synthetischen Polyisoprens, welches ein Molekulargewicht von größer als 200000 g/mol aufweist, und
- 2 bis 50 phr wenigstens eines synthetischen Polyisoprens, welches ein Molekulargewicht von 500 bis 70000 g/mol aufweist, und
- 2 bis 20 phr wenigstens eines Kohlenwasserstoffharzes, welches ein Homopolymer und/oder ein Copolymer ist und ausgewählt ist aus der Gruppe bestehend aus Cumaron-Inden-Harzen und/oder Terpen-Phenol-Harzen und/oder Phenol-Formaldehyd-Harzen und/oder aliphatischen C5-Kohlenwasserstoffharzen und/oder aliphatischen C7-Kohlenwasserstoffharzen und/oder aromatischen C7-Kohlenwasserstoffharzen und/oder aliphatischen C9-Kohlenwasserstoffharzen und/oder aromatischen C9-Kohlenwasserstoffharzen und/oder Terpenharzen und/oder Kolophoniumharzen, und
- 5 bis 180 phr Kieselsäure.

2. Schwefelvernetzbare Kautschukmischung nach Anspruch 1, **dadurch gekennzeichnet, dass** das Kohlenwasserstoffharz einen Erweichungspunkt von 0 °C bis 170 °C hat.

3. Schwefelvernetzbare Kautschukmischung nach Anspruch 1 oder 2, **dadurch gekennzeichnet, dass** das aliphatische C5-Kohlenwasserstoffharz einen Erweichungspunkt von 80 °C bis 120 °C hat.

4. Schwefelvernetzbare Kautschukmischung nach einem der Ansprüche 1 bis 3, **dadurch gekennzeichnet, dass** das Cumaron-Inden-Harz einen Erweichungspunkt von 0 °C bis 50 °C hat.

5. Schwefelvernetzbare Kautschukmischung nach einem der Ansprüche 1 bis 4, **dadurch gekennzeichnet, dass** das Terpenharz ein Homopolymer und/oder Copolymer auf Basis von Limonen und/oder α-Pinen und/oder β-Pinen und/oder Dipenten ist.

6. Schwefelvernetzbare Kautschukmischung nach einem der Ansprüche 1 bis 5, **dadurch gekennzeichnet, dass** sie zusätzlich 0,1 bis 30 phr wenigstens eines weiteren Weichmachers enthält.

7. Fahrzeugluftreifen, **dadurch gekennzeichnet, dass** er in wenigstens einem Bauteil wenigstens eine Kautschukmischung nach einem der Ansprüche 1 bis 6 enthält.

8. Fahrzeugluftreifen nach Anspruch 7, **dadurch gekennzeichnet, dass** das Bauteil ein Laufstreifen ist.

## Claims

1. Sulphur-crosslinkable rubber mixture comprising
- from 1 to 90 phr of at least one styrenebutadiene rubber and/or at least one butadiene rubber and
- from 5 to 95 phr of at least one natural and/or synthetic polyisoprene, the molar mass of which is greater than 200 000 g/mol, and
- from 2 to 50 phr of at least one synthetic polyisoprene, the molar mass of which is from 500 to 70 000 g/mol, and
- from 2 to 20 phr of at least one hydrocarbon resin which is a homopolymer and/or a copolymer and is selected from the group consisting of coumarone-indene resins and/or terpene-phenol resins and/or phenol-formaldehyde resins and/or aliphatic C5-hydrocarbon resins and/or aliphatic C7-hydrocarbon resins and/or aromatic C7-hydrocarbon resins and/or aliphatic C9-hydrocarbon resins and/or aromatic C9-hydrocarbon resins and/or terpene resins and/or colophony resins, and
- from 5 to 180 phr of silica.

2. Sulphur-crosslinkable rubber mixture according to Claim 1, **characterized in that** the softening point of the hydrocarbon resin is from 0°C to 170°C.

3. Sulphur-crosslinkable rubber mixture according to Claim 1 or 2, **characterized in that** the softening point of the aliphatic C5-hydrocarbon resin is from 80°C to 120°C.

4. Sulphur-crosslinkable rubber mixture according to any of Claims 1 to 3, **characterized in that** the softening point of the coumarone-indene resin is from 0°C to 50°C.

5. Sulphur-crosslinkable rubber mixture according to any of Claims 1 to 4, **characterized in that** the terpene resin is a homopolymer and/or copolymer based on limonene and/or α-pinene and/or β-pinene and/or dipentene.

6. Sulphur-crosslinkable rubber mixture according to any of Claims 1 to 5, **characterized in that** it also comprises from 0.1 to 30 phr of at least one further plasticizer.

7. Pneumatic tyre, **characterized in that** in at least one component it comprises at least one rubber mixture according to any of Claims 1 to 6.

8. Pneumatic tyre according to Claim 7, **characterized in that** the component is a tread.

## Revendications

1. Mélange de caoutchouc réticulable au soufre, contenant :
- 1 à 90 pce d'au moins un caoutchouc de styrène-butadiène et/ou au moins un caoutchouc de butadiène, et
- 5 à 95 pce d'au moins un polyisoprène naturel et/ou synthétique, qui présente un poids moléculaire supérieur à 200 000 g/mol, et
- 2 à 50 pce d'au moins un polyisoprène synthétique, qui présente un poids moléculaire de 500 à 70 000 g/mol, et
- 2 à 20 pce d'au moins une résine hydrocarbonée, qui est un homopolymère et/ou un copolymère et est choisie dans le groupe constitué par les résines de coumarone-indène et/ou les résines de terpène-phénol et/ou les résines de phénol-formaldéhyde et/ou les résines hydrocarbonées en C5 aliphatiques et/ou les résines hydrocarbonées en C7 aliphatiques et/ou les résines hydrocarbonées en C7 aromatiques et/ou les résines hydrocarbonées en C9 aliphatiques et/ou les résines hydrocarbonées en C9 aromatiques et/ou les résines de terpène et/ou les résines de colophane, et
- 5 à 180 pce de silice.

2. Mélange de caoutchouc réticulable au soufre selon la revendication 1, **caractérisé en ce que** la résine hydrocarbonée a un point de ramollissement de 0 °C à 170 °C.

3. Mélange de caoutchouc réticulable au soufre selon la revendication 1 ou 2, **caractérisé en ce que** la résine hydrocarbonée en C5 aliphatique a un point de ramollissement de 80 °C à 120 °C.

4. Mélange de caoutchouc réticulable au soufre selon l'une quelconque des revendications 1 à 3, **caractérisé en ce que** la résine de coumarone-indène a un point de ramollissement de 0 °C à 50 °C.

5. Mélange de caoutchouc réticulable au soufre selon l'une quelconque des revendications 1 à 4, **caractérisé en ce que** la résine de terpène est un homopolymère et/ou un copolymère à base de limonène et/ou d'α-pinène et/ou de β-pinène et/ou de dipentène.

6. Mélange de caoutchouc réticulable au soufre selon l'une quelconque des revendications 1 à 5, **caractérisé en ce qu'**il contient en outre 0,1 à 30 pce d'au moins un autre plastifiant.

7. Pneu automobile, **caractérisé en ce qu'**il contient dans au moins un composant au moins un mélange de caoutchouc selon l'une quelconque des revendications 1 à 6.

8. Pneu automobile selon la revendication 7, **caractérisé en ce que** le composant est une bande de roulement.
